(19) **Europäisches Patentamt / European Patent Office / Office européen des brevets**

(11) **EP 4 726 221 A1**

(12) # EUROPEAN PATENT APPLICATION

(43) Date of publication:
**15.04.2026 Bulletin 2026/16**

(21) Application number: **24205821.2**

(22) Date of filing: **10.10.2024**

(51) International Patent Classification (IPC):
**F16B 13/06** *(2006.01)*

(52) Cooperative Patent Classification (CPC):
**F16B 13/065**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hilti Aktiengesellschaft**
**9494 Schaan (LI)**

(72) Inventors:
• **Winkler, Marcel**
  **6800 Feldkirch (AT)**
• **Spampatti, Matteo**
  **9470 Buchs (CH)**
• **Marder, Johannes Alfred**
  **6800 Feldkirch (AT)**
• **Schaeffer, Marc**
  **8852 Altendorf (CH)**

(74) Representative: **Hilti Aktiengesellschaft**
**Corporate Intellectual Property**
**Feldkircherstrasse 100**
**Postfach 333**
**9494 Schaan (LI)**

(54) ## EXPANSION ANCHOR WITH VARIABLE-DIAMETER SHEAR SUPPORT SLEEVE

(57) Expansion anchor having an anchor bolt having a threaded zone and an expansion sleeve surrounding the anchor bolt. The anchor bolt has an expansion body located in a front region of the anchor bolt, wherein the expansion body has a converging zone for expanding the expansion sleeve. The anchor bolt further has a flange that provides an abutment for the expansion sleeve. The flange is arranged between the expansion body and the threaded zone. The anchor bolt further has a neck, which is arranged between the expansion body and the flange, and which adjoins both the expansion body and the flange, wherein the expansion sleeve surrounds the neck of the anchor bolt. A shear support sleeve is provided, which surrounds the threaded zone at least in regions of the threaded zone. The shear support sleeve becomes narrower on its outside as it approaches the expansion body.

Fig. 2

EP 4 726 221 A1

**Description**

The invention relates to an expansion anchor according to the preamble of claim 1.

DE9410844 U1 discloses an expansion anchor which is additionally shear-supported by a flanged sleeve. The expansion anchor is installed in a stepped bore, wherein the flanged sleeve is arranged in the larger-diameter zone of the stepped bore.

Another expansion anchor with a shear support sleeve is described in European patent application EP24192822.5.

It is an object of the invention to provide an expansion anchor which provides particularly good performance at low manufacturing and/or installation effort.

This object is achieved by an expansion anchor according to claim 1. Dependent claims refer to preferred embodiments of the invention.

Accordingly, there is provided an expansion anchor having

- an anchor bolt having a threaded zone, in particular for introducing tensile load into the anchor bolt, and
- an expansion sleeve surrounding the anchor bolt,
- wherein the anchor bolt has an expansion body located in a front region of the anchor bolt, wherein the expansion body has a converging zone for expanding the expansion sleeve,
- wherein the anchor bolt further has a flange that provides an abutment for the expansion sleeve, wherein the flange is arranged between the expansion body and the threaded zone,
- wherein the anchor bolt further has a neck, which is arranged between the expansion body and the flange, and which adjoins both the expansion body and the flange, wherein the expansion sleeve surrounds the neck of the anchor bolt, and
- wherein a shear support sleeve is provided, which surrounds the threaded zone at least in regions of the threaded zone,
  characterized in that
- the shear support sleeve becomes narrower on its outside as it approaches the expansion body.

The expansion anchor thus comprises a shear support sleeve, which surrounds the threaded zone at least in regions of the threaded zone. This shear support sleeve is intended to take up shear loads arising at the mouth of a borehole of the substrate in which the anchor bolt is arranged, thereby providing relief for the anchor bolt.

According to the invention, the shear support sleeve narrows on its exterior surface as it gets closer to the expansion body. This means that the outer diameter of the shear support sleeve decreases in the axial direction towards the expansion body and/or that the outer cross-section of the shear support sleeve decreases with decreasing distance from the expansion body, i.e. with decreasing distance from the leading front end of the anchor bolt, which is intended to be inserted first into a borehole. Consequently, a relatively small outer cross-section of the shear support is given close to the front end of the shear support sleeve, which can allow particularly easy insertion into the borehole in the substrate. On the other hand, the outer cross-section increases with increasing distance from the expansion body, i.e. with increasing distance from the leading front end of the anchor bolt, so as to maximize the cross-section in the shear plane between the substrate and the attachment part. Accordingly, particularly good performance can be obtained at particularly low installation effort.

Narrowing of the outer surface of the shear support sleeve could, in principle, include abrupt narrowing of the outer cross-section. Preferably, however, a more gradual taper of the outer surface of the shear support sleeve and thus of its outer cross-section is provided, which can be advantageous in view of stress reduction. The narrowing can extend along the entire axial length of the shear support sleeve. Preferably, however, it is only present in some regions of the shear support sleeve.

Throughout this document - wherever the terms "axially", "longitudinally", "radially", "cross section", and "circumferentially" are used, they should refer, in particular, to the longitudinal axis of the anchor bolt, unless indicated otherwise. The longitudinal axis of the anchor bolt extends through the front end of the anchor bolt, through the threaded zone, through the expansion body and through the flange.

The expansion anchor is of the stud-type (i.e. it is provided with expansion sleeve abutment on the anchor bolt).

Preferably, the shear support sleeve consists of metal, more preferably of steel, which can also be coated. This can provide particularly good performance at particularly low effort. Alternatively, the shear support sleeve could consist of a polymer material.

Preferably, the shear support sleeve has an insertion region and a support region, which is axially distant from the insertion region, wherein the insertion region is located closer to the expansion body than is the support region, wherein the shear support sleeve has a generally cylindrical, in particular circular cylindrical, outer surface in the insertion region and wherein the wherein the shear support sleeve has a generally cylindrical, in particular circular cylindrical, outer surface in the support region. It is particularly advantageous that the shear support sleeve has a first outer circumscribing diameter $d_{41}$ in the insertion region and a second outer circumscribing diameter $d_{42}$ in the support region, wherein the first outer circumscribing diameter $d_{41}$ is smaller than the second outer circumscribing diameter $d_{42}$. In particular, the insertion region and the support region are coaxial with one another and with respect to the longitudinal axis. The shear support sleeve can be designed as a stepped cylindrical sleeve with two major coaxial regions of distinct outer circumscribing diameters. Such a shear support sleeve can be particularly easy to manufacture and particularly performant. For example, the first outer circumscribing diameter $d_{41}$, i.e. the outer circumscribing diameter of the insertion section, could be specified between 12 and 12.5 mm (inclusive) to allow the shear support sleeve being inserted into the borehole in a concrete substrate easily. The second outer circumscribing diameter $d_{42}$, i.e. the outer circumscribing diameter of the support region, could be specified between 12.8 to 13 mm (inclusive) to maximize the cross-section in the shear plane (i.e. the plane between the substrate top surface and the adjoining attachment part) so as to maximising shear resistance.

In accordance with common understanding, a respective outer circumscribing diameter can be considered to be the diameter of a circle in which the outer surface of the shear support sleeve can be inscribed. In particular, a respective outer circumscribing diameter can be considered to be the diameter of the smallest circle in which the shear support sleeve fits. If the shear support sleeve has circular cylindrical outer surface, the outer circumscribing diameter equals the outer diameter.

According to a preferred embodiment of the invention, the following holds for the first outer circumscribing diameter $d_{41}$ and the second outer circumscribing diameter $d_{42}$:

$$1.1 \cdot d_{41} \leq d_{42},$$

and/or

$$d_{42} \leq 1.3 \cdot d_{41}$$

These parameters can provide particularly good balance between insertion behaviour and shear absorbance.

Moreover, it is preferred that the flange has an outer circumscribing diameter $d_{17}$, wherein the following holds for the outer circumscribing diameter $d_{17}$ of the flange and the second outer circumscribing diameter $d_{42}$:

$$1.0 \cdot d_{17} \leq d_{42},$$

and/or

$$d_{17} \leq 1.2 \cdot d_{42}.$$

Accordingly the support region has slightly larger cross-section than has the flange, with the flange usually being the widest region of the anchor bolt. This can provide a particularly good balance between setting behaviour and shear absorbance.

Again, the outer circumscribing diameter of the flange can be considered to be the diameter of the smallest circle in which the flange fits. Preferably, the flange has circular outer cross section. In this case, the outer circumscribing diameter of the flange equals the outer diameter of the flange.

It is particularly preferred that the shear support sleeve has a chamfered region that is located axially between the insertion region and the support region of the shear support sleeve, wherein in the chamfered region, the shear support sleeve has an outside chamfer. More particularly, in the chamfered region, the shear support sleeve has a conical outside chamfer. The conical outside chamfer can have a cone half angle $\alpha$, wherein, preferably the following holds:

$$0.5° \leq \alpha \leq 25.0°.$$

more preferably

$$0.5° \leq \alpha \leq 5.0°.$$

All of this can be advantageous in view of stress absorption. In line with usual understanding, the cone half angle $\alpha$ can in particular be measured from the longitudinal axis.

According to another preferred embodiment, the shear support sleeve has generally constant inner cross-section throughout. Accordingly, the cross-section of the through hole within the sleeve is generally the same throughout the shear support sleeve, i.e. it is the same all along the shear support sleeve. This can be advantageous in view of manufacturing and performance.

The invention also relates to a system comprising an expansion anchor as described here, a substrate, in particular a concrete substrate, and an attachment part, in particular a baseplate, attached to the substrate by means of the anchor. The shear support sleeve extends both within the attachment part and within the substrate, so as to be able to absorb shear between these two items.

The invention is explained in greater detail below with reference to preferred exemplary embodiments, which are depicted schematically in the accompanying drawings. Individual features of the exemplary embodiments presented below can be implemented either individually or in any combination within the scope of the present invention.

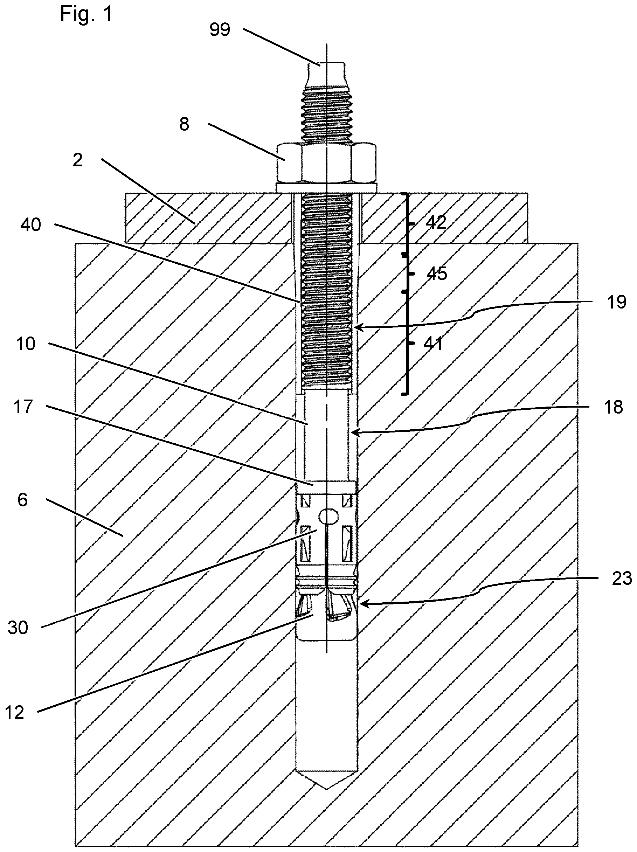

Figure 1 is a partly sectional side view (only the shear support sleeve, the substrate and the attachment part being sectional) of an expansion anchor embedded in a concrete substrate;

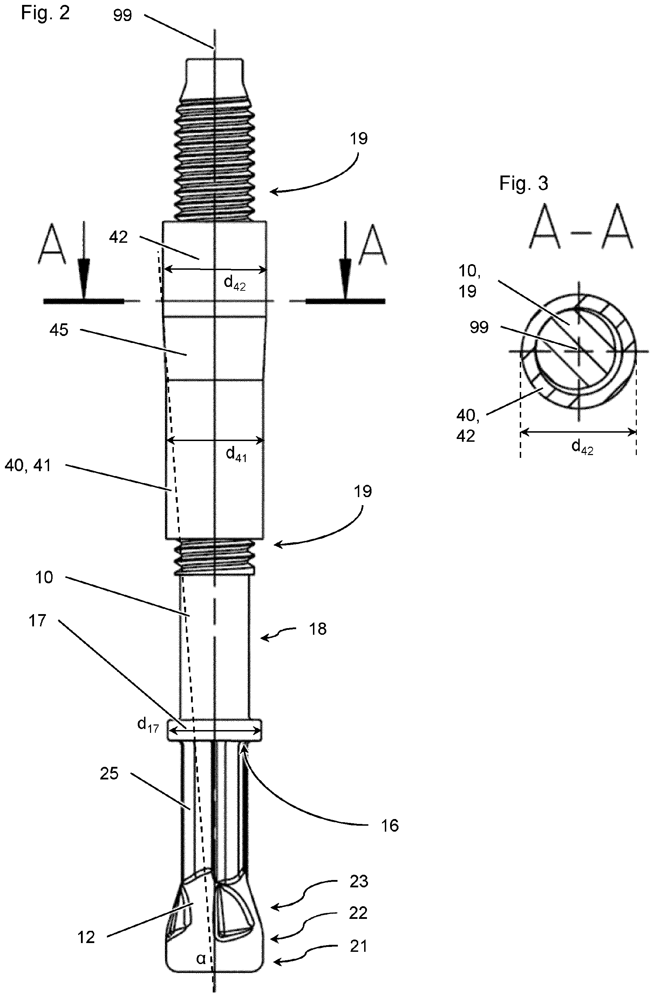

Figure 2 is a side view of the expansion anchor of figure 1, with the expansion sleeve an the nut omitted;

Figure 3 is a cross-sectional view A-A, according to figure 2, of the expansion anchor of figure 1, with the expansion sleeve omitted;

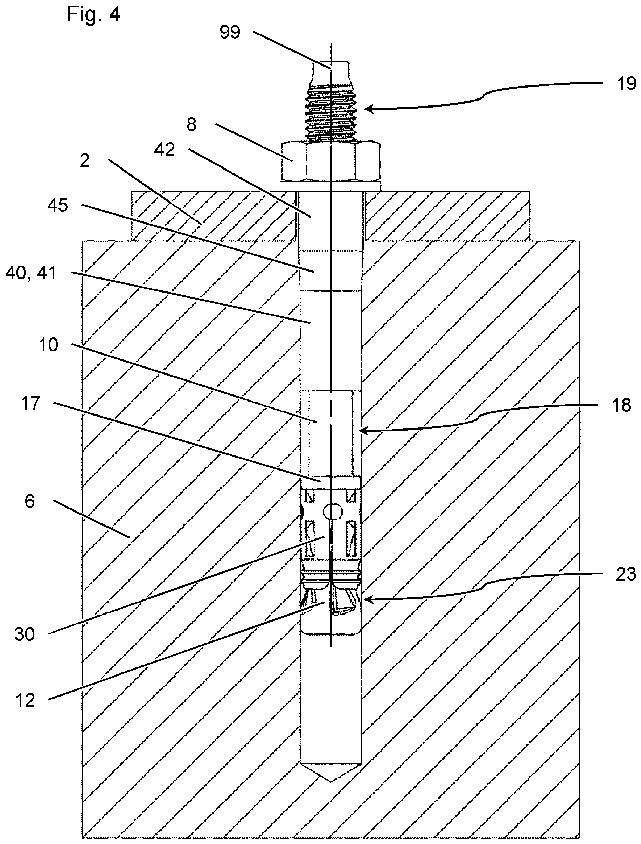

Figure 4 is another partly sectional side view (this time, only the substrate and the attachment part being sectional) of the expansion anchor of figure 1 embedded in the concrete substrate.

The figures illustrate an embodiment of an expansion anchor. The expansion anchor comprises an elongate anchor bolt 10 that defines a longitudinal axis 99, wherein the longitudinal axis extends through a leading front end of the anchor bolt 10, which is intended to be inserted first into a borehole, and through a trailing rear end of the anchor bolt. The expansion anchor furthermore comprises an expansion sleeve 30 encompassing the anchor bolt 10.

The anchor bolt 10 comprises an expansion body 12 designated for radially expanding the expansion sleeve 30. The expansion body 12 is situated proximate to the front end of the anchor bolt 10. In the current embodiment, the expansion body 12 and the remainder of the anchor bolt 10 are integrally formed, exhibiting a monolithic structure.

The expansion body 12 has a converging zone 23 designed for radially expanding the expansion sleeve 30 when the expansion body 12 is drawn into the expansion sleeve 30 in the rearward direction. For this purpose, the lateral surface of the expansion body 12 converges in the converging zone 23 towards the rear end of the anchor bolt 10. In the present example, the expansion body 12 lateral surface has generally conical envelope in the converging zone 23, with a focus of convergence on the longitudinal axis 99. However, this is merely an example, and other converging designs are also possible. In the present embodiment, recesses are provided in the expansion body 12 within the converging zone 23, which might interact with the expansion sleeve 30 so as to modulate the expansion path of the expansion sleeve 30.

In this example, the expansion body 12 is designed with a transition zone 22 and a tip zone 21. The transition zone 22 is located forward of and adjacent to the converging zone 23, while the tip zone 21 is located forward of and adjacent to the transition zone 22. In the transition zone 22, the rearward convergence is less pronounced compared to the converging zone 23, or it may even be zero. However, it is preferably not reversed, meaning it does not converge forward. In this specific example, there is no convergence (i.e. it is zero) in the transition zone 22. The expansion body 12 features a cylindrical lateral surface in the converging zone 23, specifically a cylinder with a circular base. In the tip zone 21, the lateral surface of the expansion body 12 converges towards the front end of the anchor.

The anchor bolt 10 has a neck 25, which is located adjacent to and rearwards of the expansion body 12. The expansion sleeve 30 at least partly surrounds this neck 25, at least before installation the anchor. At the neck 25, the cross-sectional area of the anchor bolt 10 can be minimal. In particular, the neck 25 has generally cylindrical shape. The cylinder base could be circular. However, in the present embodiment, a plurality of longitudinal grooves is provided within the neck 25, with the grooves extending parallel to the longitudinal axis 99. Accordingly, the cylinder base is non-circular in the present embodiment. The expansion sleeve 30 engages in the longitudinal grooves. For this purpose, the expansion sleeve 30 has axially extending ribs, which project into the respective longitudinal grooves. This engagement forms a rotational lock, which prevents rotating of the expansion sleeve 30 around the anchor bolt 10.

The anchor is of the stud type. Accordingly, the anchor bolt 10 has, adjoining the neck 25 at the rearward end of the neck 25, a shoulder 16 that faces forwards, i.e. which faces the expansion body 12, wherein the shoulder 16 provides a rearward axial abutment for the expansion sleeve 30 for advancing the expansion sleeve 30 forwards into a borehole when the anchor is inserted into the borehole. In particular, the anchor bolt comprises a flange 17 that projects from the anchor bolt 10, wherein the shoulder 16 is provided on the flange 17. Accordingly, the flange 17 provides an axial abutment for the expansion sleeve 30 for advancing the expansion sleeve 30 forwards into the borehole when the anchor is inserted into the borehole. The flange 17 has generally circular outline, with outer diameter $d_{17}$. It adjoins the neck 25 at the rearward end of the neck 25. Preferably, the flange 17 and the remainder of the anchor bolt 10 are integrally formed, exhibiting a monolithic structure.

In a rear region of the anchor bolt 10, the anchor bolt 10 is provided with a threaded zone 19, in which the anchor bolt is provided with an outer thread. The threaded zone 19 provides a tension-introducing structure for introducing rearwardly-directed tension into the anchor bolt 10.

Located in-between the threaded zone 19 and the flange 17, the anchor bolt 10 might have an unthreaded zone 18. The unthreaded zone 18 is generally cylindrical, in the present embodiment with cylindrical base.

The anchor bolt 10 consists of a metal material, preferably of steel, which might optionally be coated. The expansion sleeve 30 consists of a metal material, preferably of steel, which might optionally be coated.

The anchor further comprises a shear support sleeve 40, which surrounds the anchor bolt 10, at least in threaded zone 19. The shear support sleeve 40 is so positioned that it bridges the mouth of the borehole when the anchor is installed in the borehole as intended. In particular, when the anchor is installed as intended, the shear support sleeve 40 extends both within an attachment part 2 attached by means of the anchor and within the substrate 6 in which the anchor is anchored. Accordingly, the shear support sleeve 40 is able to transfer shear loads, i.e. loads directed perpendicular to the longitudinal axis 99 of the anchor bolt 10, from the attachment part 2 into the substrate 6.

The shear support sleeve 40 becomes narrower on its outside, i.e. its outside diameter decreases, as it approaches the expansion body 12. In particular, the shear support sleeve 40 has an insertion region 41 and a support region 42, which is axially distant from the insertion region 41. The insertion region 41 is located closer to the expansion body 12 than is the support region 42. The shear support sleeve 40 has a circular cylindrical outer surface both in the insertion region 41 and in the support region 42, wherein the shear support sleeve 40 has a first outer diameter $d_{41}$ in the insertion region 41 and a second outer diameter $d_{42}$ in the support region 42. The first outer diameter $d_{41}$ is smaller than the second outer diameter $d_{42}$. The insertion region 41 and the support region 42 are connected by a chamfered region 45 of the shear support sleeve 40 that is located axially between the insertion region 41 and the support region 42 of the shear support sleeve 40. In the chamfered region 45, the shear support sleeve 40 has a conical outside chamfer, with a cone half angle $\alpha$. The insertion region 41, the support region 42 and the chamfered region 45 are coaxial with respect to the longitudinal axis 99. The shear support sleeve 40 has generally constant inner cross-section throughout, i.e. it has constant inner cross section in the insertion region 41, the support region 42 and the chamfered region 45.

The shear support sleeve 40 consists of a metal material, preferably of steel, which might optionally be coated. The substrate 6 is in particular a concrete substrate. The expansion sleeve 30 and the expansion body 12 are arranged within the substrate 6 when the anchor is installed as intended. The attachment part 2 could be e.g. a metal part, e.g. the base of a column or the base of a strut.

In a modification of the shown embodiment, the shear support sleeve 40 can have an axially extending slit, which stems from its manufacture by means of a bending process. The axially extending slit can extend, axially, along the entire shear support sleeve 40, i.e. through the insertion region 41, the support region 42 and the chamfered region 45.

When the anchor is installed, the anchor bolt 10 is introduced, front end first, into a borehole in the substrate 6 and driven into the borehole, in particular by means of hammer blows. During this process, the shear support sleeve 40 is synchronously driven into the borehole, since a nut 8 provided on the threaded zone 19 of the anchor bolt 10 abuts (directly or indirectly, e.g. via a washer as shown) against the shear support sleeve 40, and this axial abutment transfers the hammer blows onto the shear support sleeve 40. The shear support sleeve 40 is driven into the borehole until the chamfered region 45 is embedded in the substrate 6 (near the top surface of the substrate 6).

Following installation, the expansion body 12 is drawn into the front-end region of the expansion sleeve 30. In the present embodiment, this is achieved by pulling the anchor bolt 10 together with the expansion body 12 rearwardly, in particular by tightening the nut 8.

## Claims

1. Expansion anchor having

   - an anchor bolt (10) having a threaded zone (19), and
   - an expansion sleeve (30) surrounding the anchor bolt (10),
   - wherein the anchor bolt (10) has an expansion body (12) located in a front region of the anchor bolt (10), wherein the expansion body (12) has a converging zone (23) for expanding the expansion sleeve (30),
   - wherein the anchor bolt (10) further has a flange (17) that provides an abutment for the expansion sleeve (30), wherein the flange (17) is arranged between the expansion body (12) and the threaded zone (19),
   - wherein the anchor bolt (10) further has a neck (25), which is arranged between the expansion body (12) and the flange (17), and which adjoins both the expansion body (12) and the flange (17), wherein the expansion sleeve (30) surrounds the neck (25) of the anchor bolt (10), and
   - wherein a shear support sleeve (40) is provided, which surrounds the threaded zone (19) at least in regions of the threaded zone (19), **characterized in that**
   - the shear support sleeve (40) becomes narrower on its outside as it approaches the expansion body (12).

2. Expansion anchor according to claim 1, **characterized in that** the shear support sleeve (40) has an insertion region (41) and a support region (42), which is axially distant from the insertion region (41), wherein the insertion region (41) is located closer to the expansion body (12) than is the support region (42), wherein the shear support sleeve (40) has a generally cylindrical outer surface in the insertion region (41) and wherein the wherein the shear support sleeve (40) has a generally cylindrical outer surface in the support region (42).

3. Expansion anchor according to any of claims 1 or 2, **characterized in that** the shear support sleeve (40) has a first outer circumscribing diameter $d_{41}$ in the insertion region (41) and a second outer circumscribing diameter $d_{42}$ in the support region (42), wherein the first outer circumscribing diameter $d_{41}$ is smaller than the second outer circumscribing diameter $d_{42}$.

4. Expansion anchor according to claim 3,

**characterized in that**
the following holds for the first outer circumscribing diameter $d_{41}$ and the second outer circumscribing diameter $d_{42}$:

$$1.1 \cdot d_{41} \leq d_{42},$$

and/or

$$d_{42} \leq 1.3 \cdot d_{41}.$$

5. Expansion anchor according to any of claims 3 or 4, **characterized in that** the flange (17) has an outer circumscribing diameter $d_{17}$, wherein the following holds for the outer circumscribing diameter $d_{17}$ of the flange (17) and the second outer circumscribing diameter $d_{42}$:

$$1.0 \cdot d_{17} \leq d_{42},$$

and/or

$$d_{17} \leq 1.2 \cdot d_{42}.$$

6. Expansion anchor according to any of claims 2 to 5, **characterized in that** the shear support sleeve (40) has a chamfered region (45) that is located axially between the insertion region (41) and the support region (42) of the shear support sleeve (40), wherein in the chamfered region (45), the shear support sleeve (40) has an outside chamfer.

7. Expansion anchor according to claim 6, **characterized in that** in the chamfered region (45), the shear support sleeve (40) has a conical outside chamfer.

8. Expansion anchor according to claim 7, **characterized in that** the conical outside chamfer has a cone half angle $\alpha$, wherein the following holds:

$$0.5° \leq \alpha \leq 25.0°.$$

9. Expansion anchor according to any of the proceeding claims, **characterized in that** the shear support sleeve (40) has generally constant inner cross-section throughout.

10. System comprising an expansion anchor according any of the proceeding claims, a substrate (6) and an attachment part (2), in particular a baseplate, attached to the substrate (6) by means of the anchor.

Fig. 1

Fig. 2

Fig. 3

A – A

Fig. 4

| | Europäisches Patentamt European Patent Office Office européen des brevets | **EUROPEAN SEARCH REPORT** | Application Number EP 24 20 5821 |
|---|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | DE 94 10 844 U1 (FISCHER ARTUR WERKE GMBH [DE]) 9 November 1995 (1995-11-09) * the whole document * ----- | 1-10 | INV. F16B13/06 |
| | | | TECHNICAL FIELDS SEARCHED (IPC) F16B |

The present search report has been drawn up for all claims

| Place of search | Date of completion of the search | Examiner |
|---|---|---|
| Munich | 22 January 2025 | Pirog, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5821

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2025

| Patent document cited in search report | Publication date | Patent family member(s) | Publication date |
|---|---|---|---|
| DE 9410844 U1 | 09-11-1995 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 9410844 U1

- EP 24192822